# EUROPÄISCHE PATENTSCHRIFT

(11) **EP 3 835 080 B1**
(45) Veröffentlichungstag und Bekanntmachung des Hinweises auf die Patenterteilung: **29.06.2022**
(21) Anmeldenummer: 19215682.6
(22) Anmeldetag: 12.12.2019
(51) Int. Cl.: B60B 3/10, B60B 3/00, B60B 3/02, B60B 3/06

(54) **RAD AUS LEICHTMETALL**
LIGHTWEIGHT METAL WHEEL
ROUE EN MÉTAL LÉGER

(43) Veröffentlichungstag der Anmeldung: 16.06.2021
(73) Patentinhaber: Borbet GmbH, 59969 Hallenberg (DE)
(72) Erfinder: JÜRGENS, Klaus, 59939 Olsberg (DE); ENGEL, Bernd, 59969 Bromskirchen (DE)
(74) Vertreter: Brinkmann & Partner

(56) Entgegenhaltungen:
- CN-A- 107 878 108
- DE-A1-102011 104 253
- US-A- 6 158 820
- US-A1- 2014 138 250

## Beschreibung

Die vorliegende Erfindung betrifft ein Rad aus Leichtmetall.

Leichtmetallräder, meist aus Aluminiumlegierungen, seltener auf Magnesiumbasis, werden gegossen oder geschmiedet. Aufgrund des jeweiligen Herstellungsprozesses ist es erforderlich, auch in solchen Bereichen Material vorzusehen, die auf die mechanischen Eigenschaften wie Festigkeit und dergleichen des jeweiligen Rades in der beabsichtigten Nutzungsart keinen oder einen vernachlässigbaren Einfluss haben.

Entsprechende Räder haben einen äußeren Ring, der der Aufnahme des Reifens dient. Zentral ist ein sogenannter Radflansch ausgebildet, der der Verbindung des Rades mit der jeweiligen fahrzeugseitigen Baugruppe dient. Der äußere Ring und der Radflansch sind durch den sogenannten Radkranz miteinander verbunden. Ein Rad ähnlicher Art ist aus CN 107 878 108 A bekannt.

Das Rad hat eine Außenseite, die bei bestimmungsgemäßem Anbau an ein Fahrzeug von außen sichtbar ist, sowie eine Innenseite. Die Außenseite ist in der Regel nach Designgesichtspunkten gestaltet. Es werden Speichen ausgebildet oder entsprechende Flächen, die gewünschte optische Wirkungen erzeugen. Im Stand der Technik sind Glanzflächen, gedreht oder gefräst, Lackieren, Mehrfarbigkeiten und dergleichen bekannt. Im Zusammenhang mit der ständigen Forderung nach Erhöhung der Wirtschaftlichkeit beim Betrieb von Fahrzeugen wird generell auch ein hoher Wert auf das Gewicht von Einzelbauteilen gelegt. Dies betrifft auch die Räder.

Im Stand der Technik ist es auch bekannt, den äußeren Ring an seiner Innenseite im Bereich der zur Außenseite hin liegenden Kante zu hinterdrehen. Man spricht vom sogenannten "undercut". Dadurch entsteht eine Art Rinne, die zum einen massiv zur Schmutzaufnahme neigt, zum anderen je nach Design auch von der Außenseite her sichtbar ist und somit die optische Erscheinung erheblich beeinflusst. Bei dieser Rinne handelt es sich um eine durch Drehen angebrachte, rotationssymetrische Ausnehmung an der Ringinnenseite.

Ausgehend vom vorbeschriebenen Stand der Technik liegt der Erfindung die **Aufgabe** zugrunde, ein Rad aus Leichtmetall sowie ein Verfahren zu dessen Herstellung vorzuschlagen, welches hinsichtlich seines Eigengewichtes optimiert ist. Zur technischen **Lösung** dieser Aufgabe wird ein Rad mit den Merkmalen des Patentanspruches 3 vorgeschlagen. Weitere Vorteile und Merkmale ergeben sich aus den Unteransprüchen. Ein Verfahren zur Herstellung eines entsprechenden Leichtmetallrades ergibt sich mit den Merkmalen des Anspruches 1.

Weitere Vorteile und Merkmale ergeben sich aus den entsprechenden Unteransprüchen. Erfindungsgemäß wird vorgeschlagen, dass am Radkranz durch mechanische Materialabtragungen dickenreduzierte Bereiche ausgebildet sind.

Insbesondere in den Bereichen, die keinen oder nur einen vernachlässigbaren Einfluss auf die mechanischen Eigenschaften des Rades haben, kann im Bereich des Radkranzes an der Innenseite Material abgetragen werden. Dieses Material war fertigungstechnisch erforderlich, das heißt es musste beispielsweise eine entsprechende Dicke gegossen werden oder hat sich beim Schmieden ergeben, der Bereich hat jedoch geringen Einfluss auf die Stabilität des Rades. Dies zumindest im Bereich der Anforderungen des jeweiligen Rades.

Erfindungsgemäß werden die dickenreduzierten Bereiche an der Innenseite des Radkranzes ausgeführt.

Im Bereich des Radflansches, insbesondere an der Innenseite des Rades, werden üblicherweise mechanische Materialabtragungen vorgenommen. Diese dienen dem Zweck, den Radflansch kompatibel zur fahrzeugseitigen Anschlussstelle auszubilden, zu ebnen und dergleichen. Dies hat mit der vorliegenden Erfindung nichts zu tun, denn hier sind für die mechanische Festigkeit relevante Bereiche zu beachten.

Der zwischen Radflansch und äußerem Ring liegende Bereich des Radkranzes, insbesondere die Innenseite, eignet sich dafür, durch mechanisches Bearbeiten Material abzutragen und damit den jeweiligen Bereich hinsichtlich der Materialstärke, also Dicke, zu reduzieren.

Erfindungsgemäß wird der jeweilige dickenreduzierte Bereich durch Fräsen ausgebildet. Das Fräsen hat den Vorteil der optimalen örtlichen Steuerung.

In vorteilhafter Weise werden die gemäß der Erfindung mechanisch bearbeiteten Bereiche zum Zwecke des Korrosionsschutzes lackiert. Hierzu werden die im Leichtmetall-Radbau üblichen Lacke verwendet.

Gemäß der Erfindung wird ein gegossenes Aluminiumrad durch erfindungsgemäße Materialabtragungen im Innenbereich des Radkranzens hinsichtlich seines Gewichtes erheblich reduziert und optimiert werden.

Weitere Vorteile und Merkmale der Erfindung ergeben sich aus der folgenden Beschreibung anhand der Figuren. Dabei zeigen:
- Fig. 1: die Ansicht der Innenseite eines Rades gemäß einem Ausführungsbeispiel der Erfindung und
- Fig. 2: eine Darstellung einer Innenansicht eines Rades gemäß einer weiteren Ausführungsform der Erfindung.

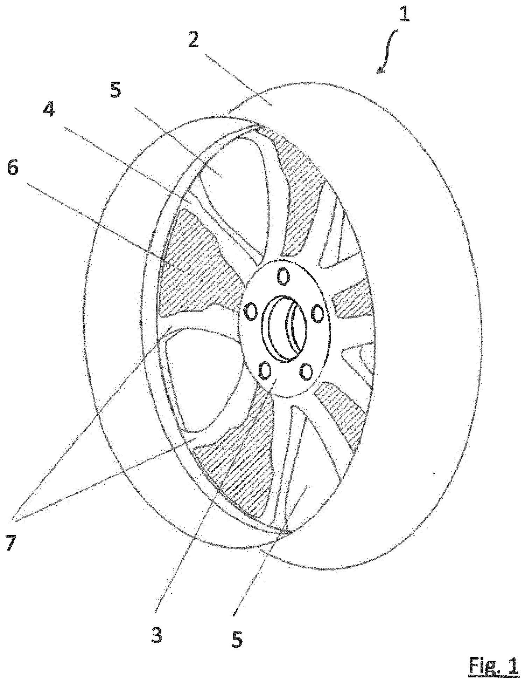

Die Figur 1 zeigt ein Rad 1, welche einen äußeren Ring 2 zur Aufnahme eines Reifens aufweist sowie einen innenliegenden Radflansch 3. Dazwischen erstreckt sich der Radkranz 4. Die Ansichten auf die Innenseite zeigen das freie Bereiche 5 und materialgefüllte Bereiche 6 ausgebildet sind, zwischen den jeweils speichenartige Ausformungen 7 ausgebildet sind.

Beim Gießvorgang ist es unvermeidlich, die Bereiche 6 mit einer ausreichenden Dicke und Ebenheit auszubilden, um den Gießvorgang und die Entformung sicher durchführen zu können.

Die Bereiche 6 haben jedoch in dem ausgefräst gezeigten Bereich keine oder nur einen geringen Einfluss auf die erforderlichen mechanischen Festigkeiten des Rades 1. Erfindungsgemäß sind in den Bereichen 6 durch Fräsen Materialabtragungen vorzunehmen, so dass diese Bereiche 6 gegenüber dem Herstellungsvorgang dickenreduziert sind.

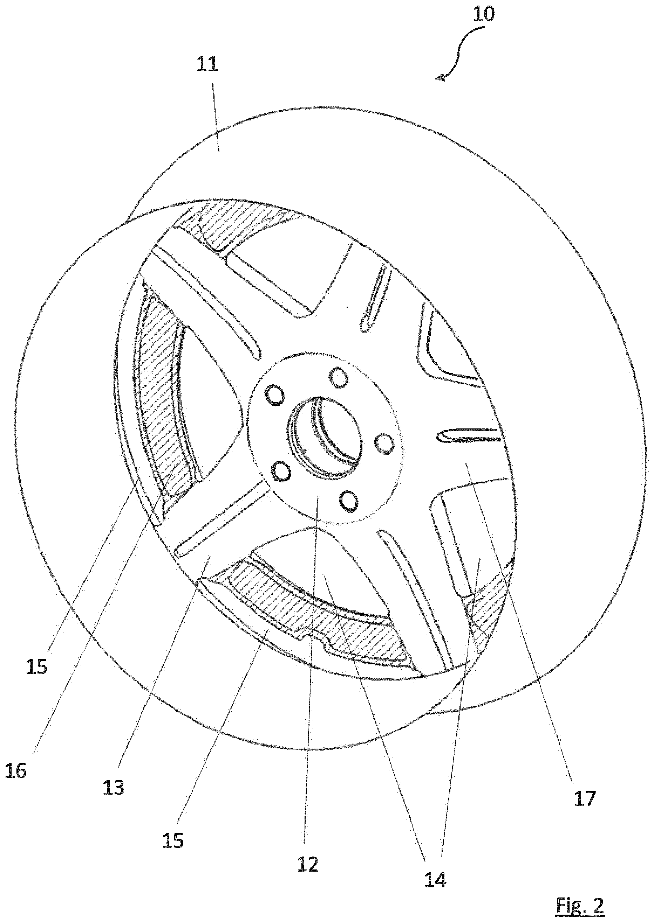

Gemäß Fig. 2 ist ein Rad 10 ebenfalls mit dem äußeren Ring 11 und dem Radflansch 12 ausgebildet. Der dazwischenliegende Radkranz 13 weist durchbrochene Bereiche 14 und 15 auf, zwischen denen ein Materialsteg 16 ausgebildet ist. Weiterhin sind Speichen 17 ausgebildet. In dem Bereich 16 kann unter Berücksichtigung der mechanischen Eigenschaften des Rades ebenfalls erfindungsgemäß die Materialabtragung durch Fräsen erfolgen, so dass dieser Bereich hinsichtlich der Dicke reduziert ist.

Die beschriebenen Ausführungsbeispiele dienen der Erläuterung und sind nicht beschränkend.

### Bezugszeichen

- 1: Rad
- 2: äußerer Ring
- 3: Radflansch
- 4: Radkranz
- 5: durchbrochener Bereich
- 6: gefüllter Bereich
- 7: Speiche
- 10: Rad
- 11: äußerer Ring
- 12: Radflansch
- 13: Radkranz
- 14: durchbrochener Bereich
- 15: durchbrochener Bereich
- 16: Steg
- 17: Speiche

## Patentansprüche

1. Verfahren zur Herstellung eines Leichtmetallrades mit einem äußeren Ring zur Aufnahme eines Reifens, welcher Ring über einen Radkranz mit einem innenliegenden Radflansch verbunden ist, wobei das Rad eine Außenseite und eine Innenseite aufweist, **gekennzeichnet durch** folgende Verfahrensschritte:
Ausbilden des einstückigen Rades durch einen Gießprozess;
dem Gießprozess nachfolgendes Ausbilden von dickenreduzierten Bereichen durch mechanische Materialabtragung in einem Bereich an der Innenseite des Radkranzes zwischen dem äußeren Ring zur Aufnahme des Reifens und dem Radflansch, wobei die dickenreduzierten Bereiche mittels Fräsen ausgebildet werden.

2. Verfahren nach Anspruch 1 **dadurch gekennzeichnet, dass** das Rad nach der Herstellung der dickenreduzierten Bereiche lackiert wird.

3. Rad aus Leichtmetall hergestellt nach einem Verfahren gemäß einem der Ansprüche 1 bis 2 und aufweisend einen äußeren Ring zur Aufnahme eines Reifens, einen Radflansch und einen Radkranz, wobei der Ring über den Radkranz mit dem Radflansch verbunden ist, wobei das Rad einstückig durch einen Gießprozess aus Gussmaterial erzeugt ist und wobei der Radkranz eine Außenseite und eine Innenseite aufweist, **dadurch gekennzeichnet, dass** an der Innenseite des Radkranzes zwischen dem äußeren Ring zur Aufnahme des Reifens und dem Radflansch dickenreduzierte Bereiche ausgebildet sind und dass die dickenreduzierten Bereiche durch mechanische Material-Abtragungen mittels Fräsen des Gussmaterials ausgebildet sind.

4. Rad nach Anspruch 3, **dadurch gekennzeichnet, dass** dieses ein Aluminiumrad ist.

5. Rad nach Anspruch 3 oder 4 **dadurch gekennzeichnet, dass** dieses wenigstens in den dickenreduzierten Bereichen lackiert ist.

## Claims

1. Method of manufacturing a lightweight metal wheel having an outer ring for receiving a tire, which ring is connected to an inner wheel flange via a wheel rim, the wheel having an outer side and an inner side,
**characterized by** the following method steps:
forming the one-piece wheel by a casting process;
following the casting process, forming thickness-reduced regions by mechanical material removal in an area on the inside of the wheel rim between the outer ring for receiving the tire and the wheel flange, wherein the thickness-reduced regions are formed by milling.

2. Method according to claim 1, **characterized in that** the wheel is painted after the thickness-reduced regions have been produced.

3. A wheel made of lightweight metal, produced by a method according to any one of claims 1 to 2 and comprising an outer ring for receiving a tire, a wheel flange and a wheel rim, wherein the ring is connected to the wheel flange via the wheel rim, wherein the wheel is formed in one piece by a casting process from cast material, and wherein the wheel rim has an outer side and an inner side, **characterized in that** thickness-reduced regions are formed on the inner side of the wheel rim between the outer ring for receiving the tire and the wheel flange, and **in that** the thickness-reduced regions are formed by mechanical material removal by milling the cast material.

4. Wheel according to claim 3, **characterized in that** the same is an aluminum wheel.

5. Wheel according to claim 3 or 4, **characterized in that** this is painted at least in the thickness-reduced regions.

## Revendications

1. Procédé de fabrication d'une roue en métal léger comprenant un anneau extérieur destiné à recevoir un pneu, lequel anneau est relié par une jante de roue à un flasque de roue intérieur, la roue présentant un côté extérieur et un côté intérieur,
**caractérisé par** les étapes de procédé suivantes:
formation de la roue d'une seule pièce par un processus de coulée;
après le processus de coulée, formation de zones d'épaisseur réduite par enlèvement mécanique de matière dans une zone sur le côté intérieur de la jante de roue entre l'anneau extérieur destiné à recevoir le pneu et le flasque de roue, les zones d'épaisseur réduite étant formées par fraisage.

2. Procédé selon la revendication 1, **caractérisé en ce que** la roue est peinte après la réalisation des zones à épaisseur réduite.

3. Roue en métal léger, fabriquée selon un procédé conforme à l'une des revendications 1 à 2 et présentant un anneau extérieur destiné à recevoir un pneu, un flasque de roue et une jante de roue, l'anneau étant relié au flasque de roue par l'intermédiaire de la jante de roue, la roue étant produite d'une seule pièce par un processus de coulée à partir d'un matériau de coulée et la jante de roue présentant un côté extérieur et un côté intérieur, **caractérisée en ce que** des zones d'épaisseur réduite sont formées sur le côté intérieur de la jante de roue entre l'anneau extérieur destiné à recevoir le pneu et le flasque de roue, et **en ce que** les zones d'épaisseur réduite sont formées par enlèvement mécanique de matière au moyen d'un fraisage du matériau de coulée.

4. Roue selon la revendication 3, **caractérisée en ce qu'**il s'agit d'une roue en aluminium.

5. Roue selon la revendication 3 ou 4, **caractérisée en ce qu'**elle est peinte au moins dans les zones à épaisseur réduite.
